# EUROPÄISCHE PATENTSCHRIFT

(11) **EP 2 374 692 B1**
(45) Veröffentlichungstag und Bekanntmachung des Hinweises auf die Patenterteilung: **05.03.2014**
(21) Anmeldenummer: 11002987.3
(22) Anmeldetag: 08.04.2011
(51) Int. Cl.: B62D 5/06, B62D 5/07, B62D 6/00, B62D 101/00, B62D 113/00, B62D 5/09

(54) **Mobile Arbeitsmaschine, insbesondere Flurörderzeug**
Mobile work machine, in particular industrial truck
Machine de travail mobile, notamment chariot de manutention

(30) Priorität: 09.04.2010 DE 102010014317
(43) Veröffentlichungstag der Anmeldung: 12.10.2011
(73) Patentinhaber: Linde Material Handling GmbH, 63743 Aschaffenburg (DE)
(72) Erfinder: Welschof, Bernward, Dr., 63762 Grossostheim (DE); Herrmann, Udo, 63867 Johannesberg (DE); Knechtel, Hans-Ulrich, 63785 Obernburg (DE)
(74) Vertreter: Geirhos, Johann

(56) Entgegenhaltungen:
- DE-A1-102005 035 171

## Beschreibung

Die Erfindung betrifft eine mobile Arbeitsmaschine, insbesondere Flurförderzeug, mit einer hydraulischen Lenkungseinrichtung, die von einem Lenkwinkelgeber, der mit einem Lenkventil in mechanischer Wirkverbindung steht, gebildet ist, das in Abhängigkeit von der Betätigung des Lenkwinkelgebers die Verbindung eines Lenkantriebs mit einer Druckversorgungsquelle und einem Behälter steuert, wobei das Lenkventil einen hydraulischen Steuerpfad bildet, die eine feste Lenkübersetzung aufweist, wobei ein paralleler hydraulischer Steuerpfad für den Lenkantrieb vorgesehen ist, der dem hydraulischen Steuerpfad zuschaltbar ist, wobei mit dem parallelen hydraulischen Steuerpfad ein Zusatzvolumenstrom zu dem Lenkantrieb erzeugbar ist und bei einer Zuschaltung des parallelen hydraulischen Steuerpfades eine Veränderung der Lenkübersetzung erzielbar ist.

Hydraulische Lenkungseinrichtungen, bei denen ein von einem Lenkwinkelgeber, beispielsweise einem Lenkrad, mechanisch betätigtes Lenkventil die Beaufschlagung eines Lenkantriebs, beispielsweise eines Lenkzylinders, der an einer Lenkachse mit den gelenkten Rädern in Wirkverbindung steht, steuert, werden bei mobilen Arbeitsmaschinen, beispielsweise als Gabelstaplern ausgebildeten Flurförderzeugen, bei Landmaschinen, Forstmaschinen oder Kommunalmaschinen, eingesetzt. Bei gattungsgemäßen Lenkungseinrichtungen steht der Lenkwinkelgeber mit dem Lenkventil über eine Lenkwelle in mechanischer trieblicher Verbindung. Zwischen dem Lenkventil und dem Lenkantrieb ist bei gattungsgemäßen hydraulischen Lenkungseinrichtungen keine mechanische Verbindung vorhanden.

Bei derartigen Lenkungseinrichtungen wird bei einer Betätigung des Lenkventils durch den Lenkwinkelgeber ein hydraulischer Steuerpfad von der Druckversorgungsquelle zu dem Lenkantrieb und von dem Lenkantrieb zu dem Behälter hergestellt, der eine feste Lenkübersetzung aufweist. Die Lenkübersetzung bildet hierbei die Anzahl der Lenkwinkelgeberumdrehungen, um den Lenkantrieb von einem ersten Anschlag, beispielsweise einem linken Anschlag, zu einem zweiten Anschlag, beispielsweise einem rechten Anschlag, zu beaufschlagen. Bei bekannten hydraulischen Lenkungseinrichtungen ist somit eine bestimmte Anzahl von Lenkwinkelgeberumdrehungen fest vorgegeben, um den Lenkantrieb von dem ersten Anschlag zu einem zweiten Anschlag zu verstellen.

Bei Arbeitsmaschinen, insbesondere Flurförderzeugen, ist jedoch gewünscht, dass die Lenkungseinrichtung im Stillstand oder bei geringer Fahrgeschwindigkeit der Arbeitsmaschine eine hohe Lenkübersetzung aufweist, um durch eine geringe Anzahl von Lenkwinkelgeberumdrehungen den Lenkantrieb von dem ersten Anschlag zu dem zweiten Anschlag zu beaufschlagen, wodurch die Umschlagleistung der Arbeitsmaschine erhöht werden kann.

Bei hoher Fahrgeschwindigkeit der Arbeitsmaschine ist jedoch gewünscht, dass die Lenkungseinrichtung eine geringe Lenkübersetzung aufweist, d.h. eine hohe Anzahl von Lenkwinkelgeberumdrehungen erforderlich ist, um den Lenkantrieb von dem ersten Anschlag zu dem zweiten Anschlag zu beaufschlagen. Bei hohen Fahrgeschwindigkeiten können hierdurch bei einer Betätigung des Lenkwinkelgebers abrupte Ausschläge des Lenkantriebs vermieden werden, wodurch bei hohen Fahrgeschwindigkeiten die Sicherheit der Arbeitsmaschine, insbesondere die Fahrzeugstabilität gegen seitliches Kippen, bei einer Betätigung des Lenkwinkelgebers erhöht werden kann.

Insbesondere bei Arbeitsmaschinen mit Arbeitsprozessen, die einen hohen Anteil von Arbeiten im Rangierbetrieb aufweisen, wird von Fahrern oft gewünscht, bei niedrigen Fahrgeschwindigkeiten eine andere, bevorzugt eine höhere Lenkübersetzung, als bei höheren Fahrgeschwindigkeiten zu haben.

Aus der DE 10 2005 035 171 A1 ist eine gattungsgemäße mobile Arbeitsmaschine mit einer hydraulischen Lenkungseinrichtung bekannt, die zusätzlich zu dem von dem Lenkventil gebildeten hydraulischen Steuerpfad einen parallelen hydraulischen Steuerpfad für den Lenkantrieb aufweist, mit dem die Lenkübersetzung veränderbar ist.

Der vorliegenden Erfindung liegt die Aufgabe zugrunde, eine Arbeitsmaschine mit einer hydraulischen Lenkungseinrichtung der eingangs genannten Gattung zur Verfügung zu stellen, bei der die Lenkübersetzung der Lenkungseinrichtung auf einfache Weise veränderbar ist.

Diese Aufgabe wird erfindungsgemäß dadurch gelöst, dass die Arbeitsmaschine mit einer Arbeitshydraulik versehen, die mindestens ein Steuerventil zur Steuerung eines Verbrauchers der Arbeitshydraulik umfasst, wobei der parallele hydraulische Steuerpfad von einem Zusatzventil der Arbeitshydraulik gebildet ist, das mit dem Lenkantrieb in Verbindung steht.

Bei der Erfindung ist eine Parallelschaltung von zwei hydraulischen Steuerpfaden für den Lenkantrieb ausgeführt. Dem bisherigen hydraulischen Steuerpfad des Lenkantriebs, der von dem Lenkventil bei dessen Betätigung gesteuert ist und der eine feste Lenkübersetzung aufweist, kann erfindungsgemäß ein paralleler hydraulischer Steuerpfad zugeschaltet werden. Mit dem parallelen hydraulischen Steuerpfad wird dem Lenkantrieb zusätzlich zu dem bei einer Betätigung des Lenkventils über den hydraulischen Steuerpfad zugeteilten Volumenstrom ein zusätzlicher Zusatzvolumenstrom zugeführt, so dass durch Zuschalten des parallelen hydraulischen Steuerpfads auf einfache Weise eine Veränderung der Lenkübersetzung im Sinne einer Erhöhung der Lenkübersetzung erzielt wird.

Ein derartiges Zusatzventil kann auf einfache Weise an einem Steuerventilblock für die Arbeitshydraulik ergänzt werden, so dass der parallele hydraulische Steuerpfad, der eine parametrisierbare Lenkung mit variabler Lenkübersetzung ermöglicht, einen geringen Bauaufwand verursacht und auf einfache Weise ergänzt werden kann.

Die Aufgabe wird erfindungsgemäß ebenfalls dadurch gelöst, dass die Arbeitsmaschine mit einer Arbeitshydraulik versehen, die mindestens ein Steuerventil zur Steuerung eines Verbrauchers der Arbeitshydraulik umfasst, wobei der parallele hydraulische Steuerpfad von einem einen Verbraucher der Arbeitshydraulik steuernden Steuerventil gebildet ist, wobei eine Umschaltventileinrichtung vorgesehen ist, mittels der das Steuerventil zwischen dem Verbraucher und dem Lenkantrieb umschaltbar ist. Mit einer derartigen Umschaltventileinrichtung kann der parallele hydraulische Steuerpfad auf einfache Weise von einem Steuerventil versorgt werden, das zur Versorgung eines bereits vorhandenen Steuerventils für einen Verbraucher der Arbeitshydraulik in dem Steuerventilblock der Arbeitshydraulik vorhanden ist. Mit einer Umschaltventileinrichtung kann hierbei auf einfache Weise das Steuerventil zwischen einer Versorgung des Verbrauchers und einer Versorgung des parallelen hydraulischen Steuerpfades umgeschalten werden und entsprechend der parallele hydraulische Steuerpfad zu- bzw. abgeschaltet werden.

Gemäß einer vorteilhaften Ausführungsform der Erfindung ist der parallele hydraulische Steuerpfad als steuerbarer Steuerpfad ausgebildet, der einen steuerbaren Zusatzvolumenstrom erzeugt. Hierdurch kann eine variable Veränderung der Lenkübersetzung durch den parallelen hydraulischen Steuerpfad bei dessen Zuschaltung und somit eine variable Lenkübersetzung erzielt werden. Dadurch wird es weiterhin ermöglicht, den parallelen hydraulischen Steuerungspfad parametrisierbar auszuführen, um eine variable Lenkübersetzung in Abhängigkeit von Betriebsund/oder Fahrzeugszuständen der Arbeitsmaschine zu erzielen.

Besondere Vorteile ergeben sich, wenn gemäß einer bevorzugten Ausgestaltungsform der Erfindung zur Ansteuerung des parallelen hydraulischen Steuerpfads eine elektronische Steuereinrichtung vorgesehen ist, die eingangsseitig mit zumindest einer den Fahrzeugzustand der Arbeitsmaschine erfassenden Sensoreinrichtung, insbesondere einer die Fahrgeschwindigkeit der Arbeitsmaschine erfassenden Sensoreinrichtung und/oder einer die Kurvenfahrt der Arbeitsmaschine erfassenden Sensoreinrichtung, insbesondere einem dem Lenkwinkelgeber zugeordneten Lenkwinkelsensor, in Wirkverbindung steht. Der parallele hydraulische Steuerpfad kann durch eine elektronische Steuereinrichtung auf einfache Weise in Abhängigkeit von der Fahrgeschwindigkeit und/oder dem Lenkwinkel zu- und abgeschaltet werden. Zudem kann von einer elektronischen Steuereinrichtung auf einfache Weise bei einem steuerbaren parallelen hydraulischen Steuerpfad der Zusatzvolumenstrom in Abhängigkeit von der Fahrgeschwindigkeit und/oder dem Lenkwinkel gesteuert werden, wodurch der parallele hydraulische Steuerpfad parametrisierbar ansteuerbar ist, um eine parametrische Lenkung zu erzielen, die eine variabler Lenkübersetzung aufweist, die an Fahrzeugszustände angepasst ist.

Sofern gemäß einer zweckmäßigen Weiterbildung der Erfindung die elektronische Steuereinrichtung derart ausgebildet ist, dass bei Erreichen eines Fahrgeschwindigkeitsgrenzwertes der parallele hydraulische Steuerpfad abgeschaltet wird, kann auf einfache Weise ein Abschalten des parallelen hydraulischen Steuerpfades bei höheren Fahrgeschwindigkeiten aus Sicherheitsgründen erzielt werden. Hiermit wird erzielt, dass bei höheren Fahrgeschwindigkeiten die Lenkungseinrichtung ausschließlich über das Lenkventil und den von dem Lenkventil gesteuerten hydraulischen Steuerpfad gesteuert wird.

Die Umschaltventileinrichtung kann gemäß einer vorteilhaften Ausführungsform der Erfindung von einem Schaltventil gebildet werden, das mit dem Steuerventil in Verbindung steht und an den parallelen hydraulischen Steuerpfad sowie zu dem Verbraucher geführten Verbraucherleitungen angeschlossen ist. Mit einem derartigen Schaltventil, das an den hydraulischen Steuerpfad und die Verbraucherleitungen des Verbrauchers sowie an das Steuerventil angeschlossen ist, kann auf einfache Weise mit nur einem einzigen Ventil der parallele hydraulische Steuerpfad zu- bzw. abgeschaltet werden und das Steuerventil zwischen dem parallelen hydraulischen Steuerpfad und dem Verbraucher umgeschaltet werden.

Gemäß einer alternativen Ausführungsform ist die Umschaltventileinrichtung von zwei Schaltventilen gebildet, wobei ein Schaltventil dem parallelen hydraulischen Steuerpfad zugeordnet ist und das weitere Schaltventil den zu dem Verbraucher geführten Verbraucherleitungen zugeordnet ist. Mit derartigen Steuerventilen kann ebenfalls auf einfache Weise der parallele hydraulische Steuerpfad zu- bzw. abgeschaltet werden und das bereits vorhandene Steuerventil zwischen einer Versorgung des Verbrauchers und einer Versorgung des parallelen hydraulischen Steuerpfades umgeschaltet werden.

Zur Versorgung des parallelen hydraulischen Steuerpfades und des Lenkventils können getrennte Pumpen verwendet werden. Ebenfalls ist es möglich, eine gemeinsame Pumpe zur Versorgung des Lenkventils und des parallelen hydraulischen Steuerpfades vorzusehen. Die Druckversorgungsquelle kann hierbei von einer Pumpe gebildet sein, die zur Versorgung der Lenkungseinrichtung und zur Versorgung der Arbeitshydraulik vorgesehen ist, wobei der Lenkungseinrichtung eine Prioritätsventileinrichtung zugeordnet ist. Mit der Prioritätsventileinrichtung wird hierbei eine bevorzugte Versorgung der Lenkungseinrichtung über das Lenkventil und somit eine bevorzugte Versorgung des von dem Lenkventil gesteuerten hydraulischen Steuerpfades sichergestellt.

Weitere Vorteile und Einzelheiten der Erfindung werden anhand der in den schematischen Figuren dargestellten Ausführungsbeispiele näher erläutert. Hierbei zeigt
- Figur 1: einen Hydraulikschaltplan einer ersten Ausführungsform einer erfindungsgemäßen Lenkungseinrichtung einer Arbeitsmaschine,
- Figur 2: einen Hydraulikschaltplan einer zweiten Ausführungsform einer erfindungsgemäßen Lenkungseinrichtung einer Arbeitsmaschine und
- Figur 3: eine Ausgestaltungsform der Lenkungseinrichtung der Figur 2.

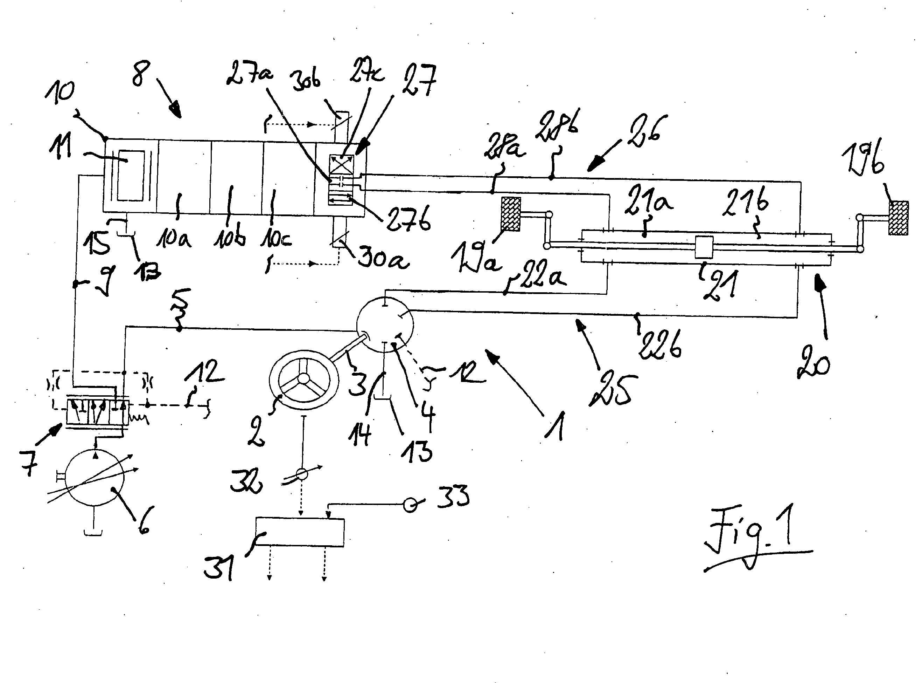

In der Figur 1 ist eine erfindungsgemäße hydraulische Lenkungseinrichtung 1 einer mobilen Arbeitsmaschine dargestellt, beispielsweise eines als Gabelstaplers ausgebildeten Flurförderzeugs. Die Lenkungseinrichtung 1 weist einen Lenkwinkelgeber 2 auf, beispielsweise ein Lenkrad, der mittels einer Lenkwelle 3 mit einem Lenkventil 4 in mechanischer trieblicher Wirkverbindung steht.

Das Lenkventil 4 steht mit einer Förderleitung 5 einer als Pumpe ausgebildeten Druckversorgungsquelle 6 in Verbindung, die mit einer nicht näher dargestellten Antriebsmaschine, beispielsweise einem Elektromotor oder einem Verbrennungsmotor, in trieblicher Verbindung steht. In der Förderleitung 5 ist eine Prioritätsventileinrichtung 7 angeordnet, an das ausgangsseitig eine zu einer Arbeitshydraulik 8 der Arbeitsmaschine geführte Förderzweigleitung 9 angeschlossen ist. Zur Steuerung der Verbraucher der Arbeitshydraulik 8 ist ein Steuerventilblock 10 vorgesehen, der mehrere nicht näher dargestellte Ventilsektionen mit entsprechenden Steuerventilen 10a, 10b, 10c aufweist und bevorzugt eine Eingangdruckwaage 11 umfasst. Bei einer als Flurförderzeug ausgebildeten Arbeitsmaschine sind die Verbraucher der Arbeitshydraulik 8 in der Regel von einem Hubantrieb, einem Neigeantrieb und einem Zusatzantrieb, beispielsweise einem Seitenschieberantrieb, des Flurförderzeugs gebildet, die mittels der entsprechenden Steuerventile betätigt werden können.

Die Prioritätsventileinrichtung 7 ist von dem in einer Lastdruckmeldeleitung 12 anstehenden Lastdruck der Lenkungseinrichtung 1 gesteuert, wodurch eine bevorzugte Versorgung der Lenkungseinrichtung 1 sicherstellt ist.

Das Lenkventil 4 ist weiterhin an eine zu einem Behälter 13 geführte Behälterleitung 14 angeschlossen. Ebenfalls ist der Steuerventilblock 10 der Arbeitshydraulik 8 mittels einer Behälterleitung 15 mit dem Behälter 13 verbunden.

Die Lenkungseinrichtung 1 weist weiterhin einen Lenkantrieb 20 auf, der beispielsweise als doppeltwirkender Lenkzylinder 21 ausgebildet ist, der an einer Lenkachse der Arbeitsmaschine angeordnet ist und mit den gelenkten Rädern 19a, 19b in Wirkverbindung steht. Der Lenkzylinder 21 ist als doppeltwirkender Gleichgangzylinder ausgebildet und weist einen ersten Steuerdruckraum 21 a und einen zweiten Steuerdruckraum 21 b auf. Der erste Steuerdruckraum 21 a steht mittels einer ersten Druckmittelleitung 22a und der zweite Steuerdruckraum 21 b mittels einer zweiten Druckmittelleitung 22b mit dem Lenkventil 4 in Verbindung. Bei einer Betätigung des Lenkwinkelgebers 2 und somit des Lenkventils 4 wird somit von dem Lenkventil 4 ein hydraulischer Steuerpfad 25 von der Druckversorgungsquelle 6 zu dem Steuerdruckraum 21 a bzw. 21 b und von dem Steuerdruckraum 21 b bzw. 21 a zu dem Behälter 13 gesteuert, wobei dieser hydraulische Steuerpfad 25 eine feste Lenkübersetzung aufweist.

Das Lenkventil 4 ist als übliches Lenkorbitrol ausgebildet. Das Lenkventil 4, die Druckversorgungsquelle 6 und der Lenkantrieb 20 bilden hierbei eine übliche hydraulische Lenkungseinrichtung 1 mit einer festen Lenkübersetzung, wobei durch die Ausbildung des Lenkventils 4 als Lenkorbitrol bei einem Ausfall der von der Pumpe gebildeten Druckversorgungsquelle 6 ein Notbetrieb ermöglicht wird. Die Lenkübersetzung über das Lenkventil 4 ist hierbei als die niedrigste Lenkübersetzung der Arbeitsmaschine ausgebildet, bei der die höchste Anzahl von Lenkwinkelgeberumdrehungen an dem Lenkwinkelgeber 2 erforderlich ist, um den Lenkantrieb 20 von einem ersten Anschlag zu einem zweiten Anschlag zu verstellen.

Erfindungsgemäß ist zu dem hydraulischen Steuerpfad 25, der von dem Lenkventil 4 bei dessen Betätigung gesteuert ist, ein paralleler hydraulischer Steuerpfad 26 für den Lenkantrieb 20 vorgesehen.

Dieser parallel geschaltete hydraulische Steuerpfad 26 ist gemäß dem Ausführungsbeispiel der Figur 1 von zwei mit dem Lenkantrieb 20 in Verbindung stehenden Druckmittelleitungen 28a, 28b und einem Zusatzventil 27 in einer entsprechenden Ventilsektion der Arbeitshydraulik 8 gebildet, das auf nicht mehr dargestellte Weise mit der Förderzweigleitung 9 und der Behälterleitung 15 in Verbindung steht und an die Druckmittelleitungen 28a, 28b angeschlossen ist. Die Druckmittelleitung 28a ist hierbei an den ersten Steuerdruckraum 21 a des Lenkzylinders 21 angeschlossen. Die Druckmittelleitung 28b ist an den zweiten Steuerdruckraum 21 b des Lenkzylinders 21 angeschlossen.

Das Zusatzventil 27 ist bevorzugt als in Zwischenstellungen drosselndes Steuerventil ausgebildet, das in der dargestellten Neutralstellung 27a im nicht betätigten Zustand, die Verbindung der Druckmittelleitungen 28a, 28b mit der Förderleitung 9 sowie der Behälterleitung 13 absperrt, wodurch der hydraulische Steuerpfad 26 abgeschaltet ist. Bei Betätigung des Zusatzventils 27 in Richtung einer ersten Steuerstellung 27b ist die Förderleitung 9 mit der Druckmittelleitung 28a und entsprechend die Druckmittelleitung 28b mit der Behälterleitung 15 verbunden, so dass dem ersten Steuerdruckraum 21 a des Lenkantriebs 20 über den hydraulischen Steuerpfad 26 ein Zusatzvolumenstrom zuführbar ist. Entsprechend ist bei einer Betätigung des Zusatzventils 27 in Richtung einer zweiten Steuerstellung 27c die Förderleitung 9 mit der Druckmittelleitung 28b und entsprechend die Druckmittelleitung 28a mit der Behälterleitung 15 verbunden, so dass dem zweiten Steuerdruckraum 21 b des Lenkantriebs 20 über den hydraulischen Steuerpfad 26 ein Zusatzvolumenstrom zuführbar ist.

Das Zusatzventil 27 ist hierbei elektrisch betätigbar, beispielsweise mittels entsprechender Betätigungseinrichtungen 30a, 30b, die von Proportionalmagneten gebildet sein können, und steht zur Betätigung mit einer elektronischen Steuereinrichtung 31 in Wirkverbindung. Die elektronische Steuereinrichtung 31 steht eingangsseitig mit zumindest einer den Fahrzeugzustand der Arbeitsmaschine erfassenden Sensoreinrichtung 32, 33 in Verbindung. Die Sensoreinrichtung 32 ist von einer die Kurvenfahrt der Arbeitsmaschine erfassenden Sensoreinrichtung, insbesondere einem dem Lenkwinkelgeber 2 zugeordneten Lenkwinkelsensor, gebildet. Die Sensoreinrichtung 33 ist als eine die Fahrgeschwindigkeit der Arbeitsmaschine erfassender Sensoreinrichtung ausgebildet.

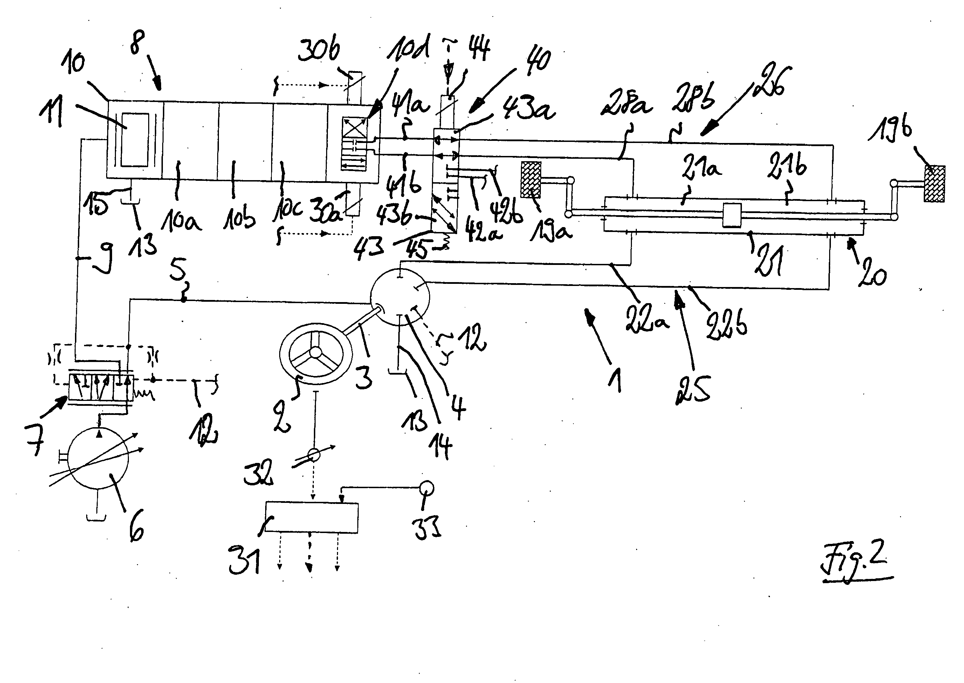

Bei der in der Figur 2 dargestellten Ausführungsform der Erfindung ist der parallele hydraulische Steuerpfad 26 von den Druckmittelleitungen 28a, 28b und einem Steuerventil 10d einer entsprechenden Ventilsektion der Arbeitshydraulik 8 zugeordnet, das zur Versorgung eines entsprechenden Verbrauchers der Arbeitshydraulik 8 vorgesehen ist, beispielsweise bei einem Flurförderzeug einem Zinkenverstellgerät, einer Kippschaufel oder einem Zinkendrehgerät. Um die Zuschaltbarkeit des parallelen hydraulischen Steuerpfades 26 zu erzielen, ist eine Umschaltventileinrichtung 40 vorgesehen, mittels der das Steuerventil 10d zwischen dem Verbraucher und dem Lenkantrieb 20 umschaltbar ist. Die Umschaltventileinrichtung 40 ist hierbei mittels zweier Verbindungsleitungen 41 a, 41 b mit dem Steuerventil 10d verbunden und an die beiden zu dem Lenkantrieb 20 geführten Druckmittelleitungen 28a, 28b sowie zwei Verbraucherleitungen 42a, 42b angeschlossen, die zu dem nicht mehr dargestellten, von dem Steuerventil 10d betätigbaren Verbraucher geführt sind.

Die Umschaltventileinrichtung 40 ist bevorzugt als Schaltventil 43 ausgebildet, das in der dargestellten Schaltstellung 43a die mit dem Steuerventil 10d in Verbindung stehenden Verbindungsleitungen 41 a, 41 b mit den Druckmittelleitungen 28a, 28b verbindet und die Verbraucherleitungen 42a, 42b absperrt. In dieser Schaltstellung 43a ist somit der parallele hydraulische Steuerpfad 26 zugeschaltet. In einer zweiten Schaltstellung 43b des Schaltventils 43 sind die mit dem Steuerventil 10d in Verbindung stehenden Verbindungsleitungen 41 a, 41 b mit den Verbraucherleitungen 42a, 42b verbunden, wobei die Druckmittelleitungen 28a, 28b abgesperrt sind. In der zweiten Schaltstellung 43b ist somit der parallele hydraulische Steuerpfad 26 abgeschaltet.

Zur Betätigung der Umschaltventileinrichtung 40 ist eine elektrische Betätigungseinrichtung 44, beispielsweise ein Schaltmagnet, vorgesehen, der mit der elektronischen Steuereinrichtung 31 zu dessen Ansteuerung in Verbindung steht. Die Umschaltventileinrichtung 41 ist hierbei von einer Feder 45 in die zweite Schaltstellung 43b beaufschlagt und kann bei einer Ansteuerung der Betätigungseinrichtung 44 in die erste Schaltstellung 43a umgeschaltet werden.

Das Steuerventil 10d ist mit dem Zusatzventil 27 der Figur 1 hinsichtlich der Ausführung als in Zwischenstellungen drosselndes Steuerventil und der Ansteuerung durch die Betätigungseinrichtungen 30a, 30b identisch und weist nicht näher beschriebene Steuerstellungen auf, die den Steuerstellungen 27a, 27b, 27c des Zusatzventils 27 entsprechen.

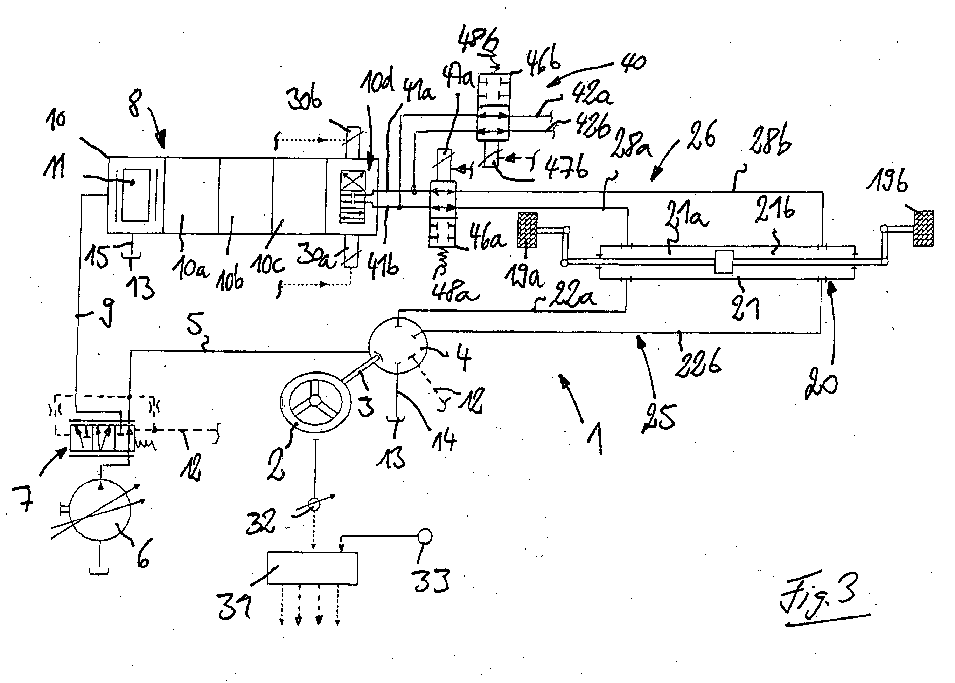

Bei der Ausgestaltungsform gemäß der Figur 3 ist anstelle der Umschaltventileinrichtung 40 der Figur 2, dass von einem Schaltventil 43 gebildet ist, die Umschaltventileinrichtung 40 von zwei Schaltventilen 46a, 46b gebildet. Die Schaltventile 46a, 46b weisen jeweils eine Sperrstellung und eine Durchflussstellung auf. Das Schaltventil 46a steuert hierbei die Zuschaltbarkeit des parallelen hydraulischen Steuerpfades 26 und ist an die Verbindungsleitungen 41 a, 41 b sowie die Druckmittelleitungen 28a, 28b angeschlossen. Das zweite Steuerventil 46b dient zum Absperren des von dem Steuerventil 10d angesteuerten Verbrauchers und ist in den Verbraucherleitungen 42a, 42b angeordnet, die zwischen dem Steuerventil 10d und dem ersten Schaltventil 46a an die Verbindungsleitungen 41 a, 41 b angeschlossen sind. Die Schaltventile 46a, 46b sind mittels jeweils einer elektrischen Betätigungseinrichtung 47a, 47b, beispielsweise einem Schaltmagnet, betätigbar und stehen zur Ansteuerung mit der elektronischen Steuereinrichtung 31 in Verbindung. Die Schaltventile 46a, 46b können hierbei jeweils von einer Feder 48a, 48b in die Sperrstellung und bei einer Ansteuerung der Betätigungseinrichtung 47a, 47b in die Durchflussstellung betätigt werden.

Durch entsprechende Ansteuerung des Zusatzventils 27 der Figur 1 bzw. der Umschaltventileinrichtung 40 sowie des Steuerventils 10d der Figuren 2 und 3 wird der parallel geschaltete hydraulische Steuerpfad 26 bei betätigtem Lenkventil 4 dem von dem Lenkventil 4 angesteuerten hydraulischen Steuerpfad 25 zugeschaltet, so dass bei entsprechend ausreichender Fördermenge der Druckversorgungsquelle 6 der Lenkantrieb 20 mit einem Zusatzvolumenstrom beaufschlagt werden kann. Durch diesen Zusatzvolumenstrom bei zugeschaltetem parallelen hydraulischen Steuerpfad 26 kann im Lenkbetrieb bei betätigtem Lenkventil 4 eine Erhöhung der Lenkungsgeschwindigkeit des Lenkantriebs 20 erzielt werden und eine Erhöhung der Lenkübersetzung erzielt werden, bei der durch eine geringere Anzahl von Lenkwinkelgeberumdrehungen 2 der Lenkantrieb 20 von dem ersten Anschlag zu dem zweiten Anschlag beaufschlagt werden kann.

Durch die Ausbildung des Zusatzventils 27 bzw. des Steuerventils 10d als in Zwischenstellungen drosselndes Steuerventil kann hierbei der Zusatzvolumenstrom des parallelen hydraulischen Steuerpfades 26 stufenlos verändert werden, so dass eine stufenlose Veränderung der Lenkübersetzung und somit eine variable Lenkübersetzung der Lenkungseinrichtung 1 erzielt werden kann. Durch entsprechende Ansteuerung des Zusatzventils 27 bzw. des Steuerventils 10d in Abhängigkeit von der Fahrgeschwindigkeit und/oder in Abhängigkeit von dem Lenkwinkel kann der parallele hydraulische Steuerpfad 26 parametrisch angesteuert werden und ein parametrisierbarer Steuerpfad 26 erzielt werden. Durch die elektronische Steuereinrichtung 31 kann somit in dem parallelen hydraulischen Steuerpfad 26 ein Zusatzvolumenstrom in Abhängigkeit von der Fahrgeschwindigkeit und/oder dem Lenkwinkel auf den Lenkzylinder 21 geschaltet werden.

Mit der Sensoreinrichtungen 32 kann hierbei die Lenkrichtung von der Steuereinrichtung 31 ermittelt werden, so dass durch entsprechende Ansteuerung des Zusatzventils 27 bzw. des Steuerventils 10d in Richtung der Steuerstellung 27a bzw. 27b sichergestellt wird, dass jeweils dem Steuerdruckraum 21 a bzw. 21 b des Lenkzylinders 21 über den zugeschalteten parallelen hydraulischen Steuerpfad 26 ein Zusatzvolumenstrom zugeführt wird, der über das betätigte Lenkventil 4 mit der Förderleitung 5 in Verbindung steht.

Durch die Erfassung der Fahrgeschwindigkeit bzw. des Lenkwinkels und somit der Kurvenfahrt mittels der Sensoreinrichtungen 32 bzw. 33 kann durch entsprechende Zuschaltung des parallelen hydraulischen Steuerpfades 26 eine parametrische Lenkung mit einer parametrisierbaren Steuerungsausführung erzielt werden, bei der durch eine variable Lenkübersetzung insbesondere bei geringer Fahrgeschwindigkeit und/oder einem hohen Lenkwinkel die Lenkübersetzung erhöht werden kann.

Die Steuereinrichtung 31 ist bevorzugt derart ausgebildet, dass bei Überschreiten einer Grenzfahrgeschwindigkeit der parallele hydraulische Steuerpfad 26 durch entsprechende Ansteuerung des Zusatzventils 27 der Figur 1 bzw. der Umschaltventileinrichtung 40 und/oder des Steuerventils 10d der Figuren 2 und 3 abgeschaltet wird. Hierdurch kann auf einfache Weise eine Abschaltung des parallelen hydraulischen Steuerpfades 26 bei hohen Fahrgeschwindigkeiten erzielt werden, die aus Sicherheitsgründen erforderlich sein kann.

Durch die Verwendung eines Zusatzventil 27 in einer entsprechenden Ventilsektion des Steuerventilblocks 10 der Arbeitshydraulik 8 bzw. eines zur Ansteuerung eines Verbrauchers vorhandenen Steuerventils 10d in einer entsprechenden Ventilsektion des Steuerventilblocks 10 der Arbeitshydraulik 8 kann der parallel geschaltete hydraulische Steuerpfad 26 auf einfache Weise erzielt werden. Dadurch wird es ebenfalls mit geringem zusätzlichen Bauaufwand möglich, bei einer von dem Lenkventil 4 gebildeten hydraulischen Lenkungseinrichtung 1 den parallelen hydraulischen Steuerpfad 26, der eine parametrische Lenkung ermöglicht, als Option vorzusehen oder nachzurüsten.

Die Erfindung ist nicht auf die dargestellte Ausführungsform einer Hydraulikanlage der Arbeitsmaschine beschränkt. Anstelle der Ausbildung der Druckversorgungsquelle 6 von einer als Verstellpumpe mit veränderbarem Fördervolumen ausgebildeten Pumpe, kann die Druckversorgungsquelle von einer als Konstantpumpe mit festem Fördervolumen ausgebildeten Pumpe gebildet sein. Anstelle einer Pumpe, die über die Prioritätsventileinrichtung 7 zur gemeinsamen Versorgung der Lenkungseinrichtung 1 und der Arbeitshydraulik 8 vorgesehen ist, können separate Pumpen vorgesehen werden, bei denen eine Pumpe zur Versorgung der Lenkungseinrichtung und eine weitere Pumpe zur Versorgung der Arbeitshydraulik dient. Bei einer von mehreren Pumpen gebildeten Druckversorgungsquelle 6 können die Pumpen jeweils als Konstantpumpen oder Verstellpumpen ausgeführt werden.

## Patentansprüche

1. Mobile Arbeitsmaschine, insbesondere Flurförderzeug, mit einer hydraulischen Lenkungseinrichtung (1), die von einem Lenkwinkelgeber (2), der mit einem Lenkventil (4) in mechanischer Wirkverbindung steht, gebildet ist, das in Abhängigkeit von der Betätigung des Lenkwinkelgebers (2) die Verbindung eines Lenkantriebs (20) mit einer Druckversorgungsquelle (6) und einem Behälter (13) steuert, wobei das Lenkventil (4) einen hydraulischen Steuerpfad bildet, die eine feste Lenkübersetzung aufweist, wobei ein paralleler hydraulischer Steuerpfad (26) für den Lenkantrieb (20) vorgesehen ist, der dem hydraulischen Steuerpfad (25) zuschaltbar ist, wobei mit dem parallelen hydraulischen Steuerpfad (26) ein Zusatzvolumenstrom zu dem Lenkantrieb (20) erzeugbar ist und bei einer Zuschaltung des parallelen hydraulischen Steuerpfades (26) eine Veränderung der Lenkübersetzung erzielbar ist, **dadurch gekennzeichnet, dass** die Arbeitsmaschine mit einer Arbeitshydraulik (8) versehen ist, die mindestens ein Steuerventil (10a; 10b; 10c) zur Steuerung eines Verbrauchers der Arbeitshydraulik (8) umfasst, wobei der parallele hydraulische Steuerpfad (26) von einem Zusatzventil (27) der Arbeitshydraulik (8) gebildet ist, das mit dem Lenkantrieb (20) in Verbindung steht.

2. Mobile Arbeitsmaschine, insbesondere Flurförderzeug, mit einer hydraulischen Lenkungseinrichtung (1), die von einem Lenkwinkelgeber (2), der mit einem Lenkventil (4) in mechanischer Wirkverbindung steht, gebildet ist, das in Abhängigkeit von der Betätigung des Lenkwinkelgebers (2) die Verbindung eines Lenkantriebs (20) mit einer Druckversorgungsquelle (6) und einem Behälter (13) steuert, wobei das Lenkventil (4) einen hydraulischen Steuerpfad bildet, die eine feste Lenkübersetzung aufweist, wobei ein paralleler hydraulischer Steuerpfad (26) für den Lenkantrieb (20) vorgesehen ist, der dem hydraulischen Steuerpfad (25) zuschaltbar ist, wobei mit dem parallelen hydraulischen Steuerpfad (26) ein Zusatzvolumenstrom zu dem Lenkantrieb (20) erzeugbar ist und bei einer Zuschaltung des parallelen hydraulischen Steuerpfades (26) eine Veränderung der Lenkübersetzung erzielbar ist, **dadurch gekennzeichnet, dass** die Arbeitsmaschine mit einer Arbeitshydraulik (8) versehen ist, die mindestens ein Steuerventil (10a; 10b; 10c; 10d) zur Steuerung eines Verbrauchers der Arbeitshydraulik (8) umfasst, wobei der parallele hydraulische Steuerpfad (26) von
einem einen Verbraucher der Arbeitshydraulik (8) steuernden Steuerventil (10d) gebildet ist, wobei eine Umschaltventileinrichtung (40) vorgesehen ist, mittels der das Steuerventil (10d) zwischen dem Verbraucher und dem Lenkantrieb (20) umschaltbar ist.

3. Mobile Arbeitsmaschine nach Anspruch 1 oder 2, **dadurch gekennzeichnet, dass** der parallele hydraulische Steuerpfad (26) als steuerbarer Steuerpfad ausgebildet, der einen steuerbaren Zusatzvolumenstrom erzeugt.

4. Mobile Arbeitsmaschine nach einem der Ansprüche 1 bis 3, **dadurch gekennzeichnet, dass** zur Ansteuerung des parallelen hydraulischen Steuerpfads (26) eine elektronische Steuereinrichtung (31) vorgesehen ist, die eingangsseitig mit zumindest einer den Fahrzeugzustand der Arbeitsmaschine erfassenden Sensoreinrichtung (32; 33), insbesondere einer die Fahrgeschwindigkeit der Arbeitsmaschine erfassenden Sensoreinrichtung und/oder einer die Kurvenfahrt der Arbeitsmaschine erfassenden Sensoreinrichtung, insbesondere einem dem Lenkwinkelgeber zugeordneten Lenkwinkelsensor, in Wirkverbindung steht.

5. Mobile Arbeitsmaschine nach Anspruch 4, **dadurch gekennzeichnet, dass** die elektronische Steuereinrichtung (31) derart ausgebildet ist, dass bei Erreichen eines Fahrgeschwindigkeitsgrenzwertes der parallele hydraulische Steuerpfad (26) abgeschaltet wird.

6. Mobile Arbeitsmaschine nach Anspruch 2, **dadurch gekennzeichnet, dass** die Umschaltventileinrichtung (40) ein Schaltventil (43) aufweist, das mit dem Steuerventil (10d) in Verbindung steht und an den parallel hydraulischen Steuerpfad (26) sowie zu dem Verbraucher geführten Verbraucherleitungen (42a, 42b) angeschlossen ist.

7. Mobile Arbeitsmaschine nach Anspruch 2, **dadurch gekennzeichnet, dass** die Umschaltventileinrichtung (40) zwei Schaltventile (46a, 46b) aufweist, wobei ein Schaltventil (46a) dem parallel hydraulischen Steuerpfad (26) zugeordnet ist und das weitere Schaltventil (46b) den zu dem Verbraucher geführten Verbraucherleitungen (42a, 42b) zugeordnet ist.

8. Mobile Arbeitsmaschine nach einem der Ansprüche 1 bis 7, **dadurch gekennzeichnet, dass** die Druckversorgungsquelle (6) von einer Pumpe gebildet ist, die zur Versorgung der Lenkungseinrichtung (1) und zur Versorgung der Arbeitshydraulik (8) vorgesehen ist, wobei der Lenkungseinrichtung (1) eine Prioritätsventileinrichtung (7) zugeordnet ist.

## Claims

1. Mobile work machine, in particular industrial truck, with a hydraulic steering device (1) which is formed by a steering-angle generator (2) which is operatively connected mechanically to a steering valve (4) which controls the connection of a steering drive (20) to a pressure supply source (6) and to a tank (13) as a function of the actuation of the steering-angle generator (2), the steering valve (4) forming a hydraulic control path which has a fixed steering ratio, there being provided for the steering drive (20) a parallel hydraulic control path (26) which is connectable to the hydraulic control path (25), an additional volumetric flow to the steering drive (20) being capable of being generated by means of the parallel hydraulic control path (26), and a variation in the steering ratio being capable of being achieved in the event of connection of the parallel hydraulic control path (26), **characterized in that** the work machine is provided with working hydraulics (8) which comprise at least one control valve (10a; 10b; 10c) for controlling a consumer of the working hydraulics (8), the parallel hydraulic control path (26) being formed by an additional valve (27) of the working hydraulics (8), which additional valve is connected to the steering drive (20).

2. Mobile work machine, in particular industrial truck, with a hydraulic steering device (1) which is formed by a steering-angle generator (2) which is operatively connected mechanically to a steering valve (4) which controls the connection of a steering drive (20) to a pressure supply source (6) and to a tank (13) as a function of the actuation of the steering-angle generator (2), the steering valve (4) forming a hydraulic control path which has a fixed steering ratio, there being provided for the steering drive (20) a parallel hydraulic control path (26) which is connectable to the hydraulic control path (25), an additional volumetric flow to the steering drive (20) being capable of being generated by means of the parallel hydraulic control path (26), and a variation in the steering ratio being capable of being achieved in the event of connection of the parallel hydraulic control path (26), **characterized in that** the work machine is provided with working hydraulics (8) which comprise at least one control valve (10a; 10b; 10c; 10d) for controlling a consumer of the working hydraulics (8), the parallel hydraulic control path (26) being formed by a control valve (10d) controlling a consumer of the working hydraulics (8), a changeover valve device (40) being provided, by means of which the control valve (10d) can be changed over between the consumer and the steering drive (20).

3. Mobile work machine according to Claim 1 or 2, **characterized in that** the parallel hydraulic control path (26) is designed as a controllable control path which generates a controllable additional volumetric flow.

4. Mobile work machine according to one of Claims 1 to 3, **characterized in that**, to activate the parallel hydraulic control path (26), an electronic control device (31) is provided, which is operatively connected on the input side to at least one sensor device (32; 33) detecting the vehicle state of the work machine, in particular to a sensor device detecting the driving speed of the work machine and/or to a sensor device detecting the cornering of the work machine, in particular a steering-angle sensor assigned to the steering-angle generator.

5. Mobile work machine according to Claim 4, **characterized in that** the electronic control device (31) is designed in such a way that the parallel hydraulic control path (26) is disconnected when a driving-speed limit value is reached.

6. Mobile work machine according to Claim 2, **characterized in that** the changeover valve device (40) has a switching valve (43) which is connected to the control valve (10d) and which is linked to the parallel hydraulic control path (26) and to consumer lines (42a, 42b) led to the consumer.

7. Mobile work machine according to Claim 2, **characterized in that** the changeover valve device (40) has two switching valves (46a, 46b), one switching valve (46a) being assigned to the parallel hydraulic control path (26) and the further switching valve (46b) being assigned to the consumer lines (42a, 42b) led to the consumer.

8. Mobile work machine according to one of Claims 1 to 7, **characterized in that** the pressure supply source (6) is formed by a pump which is provided for supplying the steering device (1) and for supplying the working hydraulics (8), a priority valve device (7) being assigned to the steering device (1).

## Revendications

1. Machine de travail mobile, en particulier chariot de manutention, comprenant un système de direction hydraulique (1) qui est formé par un générateur d'angle de direction (2) qui est en liaison fonctionnelle mécanique avec une soupape de direction (4), laquelle soupape de direction commande, en fonction de l'actionnement du générateur d'angle de direction (2), la connexion d'une commande de direction (20) à une source d'alimentation en pression (6) et à un récipient (13), la soupape de direction (4) formant un chemin de commande hydraulique qui présente un rapport de direction fixe, un chemin de commande hydraulique parallèle (26) étant prévu pour la commande de direction (20), lequel peut être branché sur le chemin de commande hydraulique (25), un débit volumique supplémentaire pouvant être généré avec le chemin de commande hydraulique parallèle (26) vers la commande de direction (20) et, dans le cas d'un branchement du chemin de commande hydraulique parallèle (26), une variation du rapport de direction pouvant être obtenue, **caractérisée en ce que** la machine de travail est munie d'un système de travail hydraulique (8) qui comprend au moins une soupape de commande (10a ; 10b ; 10c) pour commander une charge du système de travail hydraulique (8), le chemin de commande hydraulique parallèle (26) étant formé par une soupape supplémentaire (27) du système de travail hydraulique (8), laquelle soupape supplémentaire est en liaison avec la commande de direction (20).

2. Machine de travail mobile, en particulier chariot de manutention, comprenant un système de direction hydraulique (1) qui est formé par un générateur d'angle de direction (2) qui est en liaison fonctionnelle mécanique avec une soupape de direction (4), laquelle soupape de direction commande, en fonction de l'actionnement du générateur d'angle de direction (2), la connexion d'une commande de direction (20) à une source d'alimentation en pression (6) et à un récipient (13), la soupape de direction (4) formant un chemin de commande hydraulique qui présente un rapport de direction fixe, un chemin de commande hydraulique parallèle (26) étant prévu pour la commande de direction (20), lequel peut être branché sur le chemin de commande hydraulique (25), un débit volumique supplémentaire pouvant être généré avec le chemin de commande hydraulique parallèle (26) vers la commande de direction (20) et, dans le cas d'un branchement du chemin de commande hydraulique parallèle (26), une variation du rapport de direction pouvant être obtenue, **caractérisée en ce que** la machine de travail est munie d'un système de travail hydraulique (8) qui comprend au moins une soupape de commande (10a ; 10b ; 10c ; 10d) pour commander une charge du système de travail hydraulique (8), le chemin de commande hydraulique parallèle (26) étant formé par une soupape de commande (10d) commandant une charge du système de travail hydraulique (8), un système de soupape de commutation (40) étant prévu, au moyen duquel la soupape de commande (10d) peut être commutée entre la charge et la commande de direction (20).

3. Machine de travail mobile selon la revendication 1 ou 2, **caractérisée en ce que** le chemin de commande hydraulique parallèle (26) est réalisé sous forme de chemin de commande commandable qui génère un débit volumique supplémentaire commandable.

4. Machine de travail mobile selon l'une quelconque des revendications 1 à 3, **caractérisée en ce que** pour la commande du chemin de commande hydraulique parallèle (26), il est prévu un système de commande électronique (31) qui est en liaison fonctionnelle du côté de l'entrée avec au moins un système de capteur (32 ; 33) détectant l'état du véhicule de la machine de travail, en particulier un système de capteur détectant la vitesse de conduite de la machine de travail et/ou un système de capteur détectant la conduite en virage de la machine de travail, en particulier un capteur d'angle de direction associé au générateur d'angle de direction.

5. Machine de travail mobile selon la revendication 4, **caractérisée en ce que** le système de commande électronique (31) est réalisé de telle sorte qu'à l'obtention d'une valeur limite de la vitesse de conduite, le chemin de commande hydraulique parallèle (26) soit coupé.

6. Machine de travail mobile selon la revendication 2, **caractérisée en ce que** le système de soupape de commutation (40) présente une soupape de commutation (43) qui est en liaison avec la soupape de commande (10d) et qui est raccordée au chemin de commande hydraulique parallèle (26) ainsi qu'à des conduites de charge (42a, 42b) conduisant jusqu'à la charge.

7. Machine de travail mobile selon la revendication 2, **caractérisée en ce que** le système de soupape de commutation (40) présente deux soupapes de commutation (46a, 46b), une soupape de commutation (46a) étant associée au chemin de commande hydraulique parallèle (26) et l'autre soupape de commutation (46b) étant associée aux conduites de charge (42a, 42b) conduisant jusqu'à la charge.

8. Machine de travail mobile selon l'une quelconque des revendications 1 à 7, **caractérisée en ce que** la source d'alimentation en pression (6) est formée par une pompe qui est prévue pour l'alimentation du système de direction (1) et pour l'alimentation du système de travail hydraulique (8), le système de direction (1) étant associé à un système de soupape prioritaire (7).
